# EUROPÄISCHE PATENTANMELDUNG

(11) **EP 1 462 674 A1**
(43) Veröffentlichungstag der Anmeldung: **29.09.2004**
(21) Anmeldenummer: 04007077.3
(22) Anmeldetag: 24.03.2004
(51) Int. Cl.: F16D 66/02

(54) **Verschleissanzeigevorrichtung zur Anzeige von Bremsbelags-Verschleisszuständen**

(30) Priorität: 28.03.2003 DE 10314206
(71) Anmelder: BIWO B. Wojcik GmbH, 69483 Wald-Michelbach (DE)
(72) Erfinder: Bihn, Peter, 69483 Wald-Michelbach (DE)
(74) Vertreter: Reinhard - Skuhra - Weise & Partner GbR

(57) **Zusammenfassung**

Die vorliegende Erfindung stellt eine Verschleißanzeigevorrichtung zur Anzeige von Bremsbelags-Verschleißzuständen bereit, mit: einer Spannungsversorgungseinrichtung (11, 12) zum Bereitstellen einer Betriebsspannung auf einer Platine (10) über eine externe Spannungsversorgung (12) und/oder eine interne Batterie (11); einer Steuer-/Auswerteelektronik (13) zum Steuern einer Anzeigeeinrichtung (17 A - C), welche einen Bremsbelagsverschleißzustand anzeigt, und zum Auswerten von Signalen einer Mehrzahl von Verschleißgebereinrichtungen (15 A - F); eine elektrischer Verbindungseinrichtung (14 A - F) zum Anbinden der Verschleißgebereinrichtungen (15 A - F) an die Auswerteelektronik (13); und einer Speichereinrichtung (16) zum Speichern von Bremsbelagsverschleißzuständen der aktuell montierten Bremsbeläge sowie bereits ausgewechselter Bremsbeläge.

## Beschreibung

Die vorliegende Erfindung betrifft eine Verschleißanzeigevorrichtung zur Anzeige von Bremsbelags-Verschleißzuständen.

Beim Fahrzeugbau ist die Bremsanlage eines Fahrzeugs von besonderer Bedeutung. Herkömmliche Bremssysteme unterliegen einem benutzungsabhängigen Verschleiß, so dass die Bremsbeläge je nach Abnutzung von Zeit zu Zeit ausgetauscht werden müssen. Heutzutage sind die Bremsen in einem Fahrzeug typischerweise mit einer Belagverschleißanzeige ausgerüstet. Beim Erreichen eines bestimmten Verschleißzustandes wird dem Fahrer im Fahrgastraum ein Signal angezeigt. Nach einem Auswechseln des/der abgenutzten Bremsbeläge erlischt dieses Signal wiederum, bis erneut ein vorbestimmter Verschleißzustand eintritt.

Eine bekannte Überwachungs- und Anzeigeeinrichtung für den Verschleiß von Bremsbelägen ist in der DE 201 16 189 beschrieben. Dabei kommt ein mechanisches Anzeigeelement zum Einsatz, welches bei einem durch eine Auswerteeinrichtung mittels eines Sensors festgestellten Verschleißes von seiner Grundstellung in eine Warnstellung verlagert wird. In dieser Stellung verbleibt das mechanische Anzeigeelement auch ohne anliegendes elektrisches Signal. Von Nachteil bei dieser Lösung ist u.a., dass lediglich ein Verschleißsignal für das gesamte Fahrzeug generiert wird, dass ein Verschleißsignal ohne Vorwarnstufe pro Rad vorgesehen ist, und dass vor allem keine Speichereinrichtung zur Speicherung der Bremsbelags-Verschleißzustände auch nach einem Austausch der Bremsbeläge vorgesehen ist.

Der Erfindung liegt die Aufgabe zugrunde, eine Verschleißanzeigevorrichtung zur Anzeige von Bremsbelags-Verschleißzuständen bereitzustellen, welche die oben genannten Nachteile beseitigt.

Diese Aufgabe wird erfindungsgemäß durch die im Anspruch 1 angegebenen Merkmale gelöst.

Weitere Ausgestaltungen der Erfindung ergeben sich aus den Unteransprüchen.

Von Vorteil bei der erfindungsgemäßen Verschleißanzeigevorrichtung ist, dass sie neben einer Selbstversorgung durch eine integrierte Batterie auch über eine externe Spannungsversorgung gespeist werden kann. Des weiteren ist eine zusätzliche Vorwarnstufe pro Rad vorgesehen, d.h. es werden pro Rad zwei Signale angezeigt, nämlich der Endverschleißzustand sowie vorher eine Zwischenstufe. Bei Erreichen der Zwischenstufe und einer entsprechenden Anzeige ist dem Fahrzeugnutzer eine vorbestimmte Laufleistung garantiert, bevor die Bremsbeläge ausgetauscht werden müssen.

Darüber hinaus ermöglicht die erfindungsgemäße Verschleißanzeigevorrichtung einen Anschluss für elektronische Bremssysteme (brake by wire) und lässt auch einen Einsatz in Verbindung mit Trommelbremsen zu.

Durch eine Speicherfunktion der systemimmanenten Speichereinrichtung, welche nur mittels eines Passwortes ausgelesen werden kann, kann beispielsweise von einer Werkstatt der Nachweis geführt werden, ob die vorgegebenen Verschleißgrenzen des Bremsbelags bzw. der bereits ausgewechselten Bremsbeläge überschritten wurden. Zusätzlich besteht die Möglichkeit diese Information mit der Kilometerlaufleistung des Fahrzeugs zu koppeln bzw. zu speichern, und somit die Lebensdauer eines Bremsbelags präzise nachzuvollziehen zu können.

Gemäß einer weiteren Ausführungsform der vorliegenden Erfindung kann vorteilhaft ein Kabelbruch zwischen einer Steuer-/Auswerteelektronik auf einer Platine und einer Verschleißgebereinrichtung detektiert und angezeigt werden.

Außerdem ist die vorteilhafte Möglichkeit gegeben, dass ein Signal der Verschleißgebereinrichtungen jedes bremsbaren Rades auch dann ausgewertet werden kann, wenn eine Feststellbremse aktiviert ist.

Nachfolgend wird eine bevorzugte Ausführungsform der Erfindung anhand einer Zeichnung zur Erläuterung weiterer Merkmale beschrieben.

In der Zeichnung zeigt:

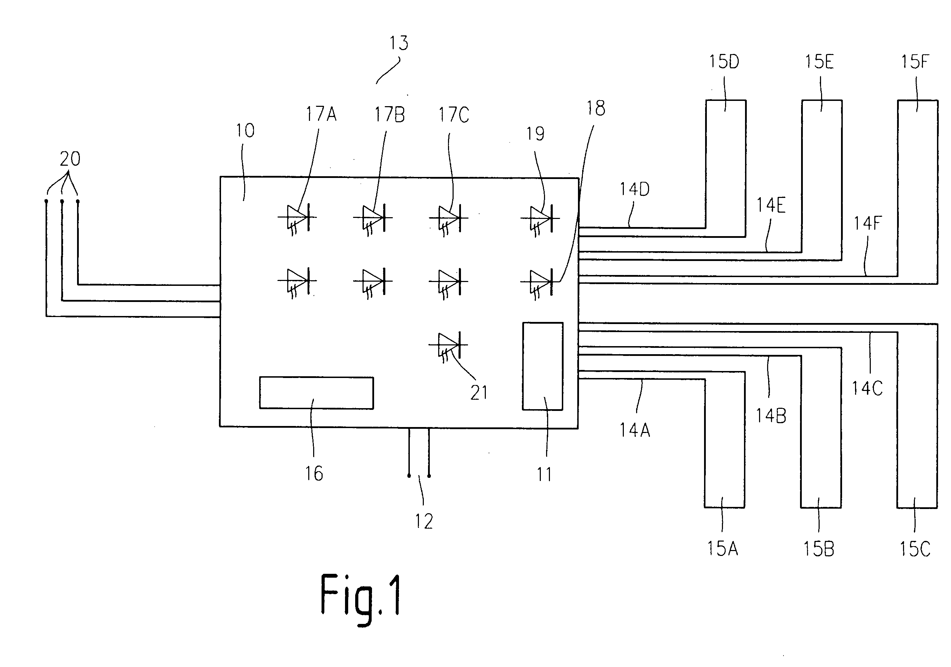

- FIG. 1: ein schematisches Schaltbild einer Verschleißanzeigevorrichtung zur Erläuterung einer Ausführungsform der vorliegenden Erfindung.

Die in FIG. 1 exemplarisch dargestellte Verschleißanzeigevorrichtung zur Anzeige von Bremsbelags-Verschleißzuständen weist einen Bauteileträger 10, vorzugsweise eine Platine, auf. Diese Platine 10 verfügt über eine integrierte Spannungsversorgungseinrichtung 11, insbesondere eine Batterie, z.B. mit der Spannung 9 V. Darüber hinaus weist sie einen externen Spannungsversorgungsanschluss 12 zum Bereitstellen einer externen Spannung, z.B. im Bereich zwischen 5 V und 60 V auf. Mit der Spannungsversorgungseinrichtung 11, 12 wird eine Steuer-/Auswerteeinrichtung 13, welche in der Zeichnung nicht näher verdeutlicht ist, auf der Platine 10 versorgt. Elektrische Verbindungseinrichtungen 14 A - F dienen dem elektrischen Anschluss von Verschleißgebereinrichtungen 15 A - F, welche an jeder Bremseinrichtung des Fahrzeugs (nicht dargestellt) vorgesehen sind. Platinenseitig sind die elektrischen Verbindungseinrichtungen 14 A, 14 B, 14 C, 14 D, 14 E, 14 F ebenso wie eine Speichereinrichtung 16 mit der Steuer-/Auswerteeinrichtung 13 verbunden.

In der Speichereinrichtung 16 auf der Platine 10 wird, wenn ein vorbestimmter Verschleißzustand vorliegt, dieser darin gespeichert. Sowohl Verschleißzustände der aktuell montierten Bremsbeläge wie sowie bereits ausgewechselter Bremsbeläge werden in der Speichereinrichtung 16 gespeichert. Ein Auslesen der einen Verschleißzustand wiedergebenden Daten aus der Speichereinrichtung 16 kann lediglich mit einer externen Zusatzelektronik, beispielsweise in einer Werkstatt erfolgen. Verschleißzustände, welche von der Steuer-/Auswerteeinrichtung 13 analysiert werden, werden durch eine Anzeigeeinrichtung 17 A, 17 B, 17 C auf der Platine 10 vorzugsweise in Form von Leuchtmitteln, wie beispielsweise LEDs, angezeigt. Vorteilhafterweise ist zusätzlich eine Spannungsversorgungsanzeige 18 auf der Platine 10 vorgesehen.

Das Bezugszeichen 19 bezeichnet eine weitere Anzeigevorrichtung, nämlich zur Anzeige eines Kabelbruches, d.h. einer Unterbrechung, der Verbindungseinrichtung 14 A - F zu den Verschleißgebereinrichtungen 15 A - F. Außerdem ist eine Anschlusseinrichtung 20, vorzugsweise zur Weiterleitung des/der ausgewerteten Signale der Verschleißgebereinrichtungen 15 A - F an externe Systeme, wie z.B. ein elektrisches bzw. elektronisches Bremssystem (brake by wire) vorgesehen.

Die Verschleißanzeigevorrichtung gemäß der vorliegenden Erfindung kann unabhängig von der Standard-Fahrzeugelektronik ausgeführt werden und beinhaltet eine Anzeige 8 für den Belagverschleiße pro bremsbarem Rad oder pro bremsbarer Achse eines entsprechenden Fahrzeuges. Weiterhin kann neben dem Endverschleißzustand auch eine Zwischenstufe angezeigt werden, welche beispielsweise neben einer roten LED für den Endverschleißzustand als gelbe Kontrollleuchte ausgeführt werden kann. Neben dem reinen Endverschleißzustand erhält der Fahrer ein zusätzliches Signal, welches ihm als Vorgabe eine vorbestimmte Laufleistung garantiert, bevor die Bremsbeläge getauscht werden müssen. Sowohl der Endverschleißzustand, falls dieser erreicht wurde, als auch die Verschleißzwischenstufe werden in der Speichereinrichtung 16 abgespeichert und mittels eines Code-Wortes von einer externen Elektronik, beispielsweise bei einem Gebrauchtwagenhändler oder einer Autovermietung, ausgelesen. Diese Daten dienen der Wartungsüberwachung der sicherheitsrelevanten Bremsbeläge des Bremssystems. Außerdem kann man, wenn in der Speichereinrichtung 16 zusätzlich eine Kilometerlaufleistung abgespeichert wird, z.B. über die Verbindungseinrichtung 20 zugeführt, die Lebensdauer eines Bremsbelages genau bestimmen.

Die erfindungsgemäße Verschleißanzeigevorrichtung bietet zumindest eine der nachfolgenden Anzeigemöglichkeiten. Eine Anzeige 17 A für den Endverschleißzustand eines Bremsbelags am gesamten Fahrzeug; eine Anzeige 17 B für den Endverschleißzustand des Belages pro Fahrzeugachse; und/oder jeweils eine Anzeigeeinrichtung 17 C für den Endverschleißzustand des Bremsbelages eines jeden bremsbaren Rades. Darüber hinaus verfügt die Verschleißanzeigevorrichtung gemäß der vorliegenden Erfindung vorzugsweise zusätzlich über eine Anzeige, welche eine Verschleißvorwarnstufe der Bremsbeläge zusätzlich zur Anzeige des Endverschleißzustands gemäß den obigen Alternativen aufweist. Außerdem wird vorzugsweise eine Batteriespannungsanzeige 18 sowie eine Anzeige 19 für einen Kabelbruch der Verbindungseinrichtungen 14 A - F, d.h. des Kabelbaums pro Rad, vorgesehen. Liegt irgendwo in einer Verbindungseinrichtung 14 A - F zu einer Verschleißgebereinrichtung 15 A - F eine Unterbrechung vor, dann leuchtet z.B. eine dazu korrespondierende LED 19. Eine zusätzliche Anzeigeeinrichtung 21 zeigt vorzugsweise an, ob eine Feststellbremse des Fahrzeugs eingelegt ist. Die Auswerteelektronik 13 wertet ein Signal der Verschleißgebereinrichtungen 15 auch dann aus, wenn die Feststellbremse aktiviert ist.

Vorliegende Erfindung schafft eine Verschleißanzeigevorrichtung, mit der die Anzeige von sowohl aktuellen Belagsverschleißzuständen möglich ist sowie die Speicherung der aktuellen Bremsbelagsverschleißzustände wie auch die Abspeicherung von vorher erfassten Bremsbelagsverschleißzuständen, das heißt, es ist auch die Abspeicherung von Verschleißzuständen möglich, die sich auf bereits ausgewechselte Bremsbeläge bezogen haben.

Gemäß einer weiteren Ausführungsform der Erfindung ist vorgesehen, dass zugleich mit der Abspeicherung der jeweiligen Belagsverschleißzustände die zugehörige Kilometerleistung elektronisch abgerufen und ebenfalls abgespeichert wird, wodurch eine Zuordnung des Verschleißzustandes zur Kilometerleistung des betreffenden Fahrzeuges möglich ist. Zu diesem Zweck ist die Speichereinrichtung zur gleichzeitigen Abspeicherung der jeweiligen Kilometerleistung ausgelegt. Entsprechend kann der Abruf der Daten aus dem Speicher vorgenommen werden.

Obwohl die vorliegende Erfindung vorstehend anhand eines bevorzugten Ausführungsbeispiels beschrieben wurde, ist sie darauf nicht beschränkt, sondern auf vielfältige Weise modifizierbar.

So sind insbesondere andere Anzeigemöglichkeiten als die vorgeschlagenen Leuchtmittel in Form von Leuchtdioden möglich, wie beispielsweise ein LCD- oder TFT-Display. Außerdem wurden bewusst keine konkreten Verschleißgebereinrichtungen spezifiziert, da sowohl auf Unterbrechung des Stromkreises als auch auf magnetischen, optischen, kapazitiven Eigenschaft oder auf Ultraschall basierende Geber vorstellbar sind. Obwohl für den Einsatz in gängigen Scheibenbremsen prädestiniert, ist ein Einsatz der erfindungsgemäßen Vorrichtung auch bei Trommelbremsen möglich.

### Bezugszeichenliste

- 10: Bauteileträger, vorzugsweise Platine
- 11: integrierte Spannungsversorgung, insbesondere Batterie
- 12: externe Spannungsversorgung
- 13: Steuer-/Auswerteeinrichtung
- 14A-F: Verbindungseinrichtung zwischen Platine und Verschleißgeber
- 15A-F: Verschleißgebereinrichtung
- 16: Speichereinrichtung
- 17A-C: Anzeigeeinrichtung Verschleißzustand
- 18: Spannungsversorgungsanzeige
- 19: Anzeigeeinrichtung zur Anzeige eines Kabelbruches
- 20: Verbindungseinrichtung zu externen Systemen
- 21: Anzeigeeinrichtung zur Anzeige einer aktivierten Feststellbremse

## Patentansprüche

1. Verschleißanzeigevorrichtung zur Anzeige von Bremsbelags-Verschleißzuständen mit:
einer Spannungsversorgungseinrichtung (11, 12) zum Bereitstellen einer Betriebsspannung über eine externe Spannungsversorgung (12) und/oder eine interne Batterie (11);
einer Steuer-/Auswerteelektronik (13) zum Steuern einer Anzeigeeinrichtung (17 A - C), welche einen Bremsbelagsverschleißzustand anzeigt, und zum Auswerten von Signalen einer Mehrzahl von Verschleißgebereinrichtungen (15 A - F);
eine elektrischer Verbindungseinrichtung (14 A - F) zum Anbinden der Verschleißgebereinrichtungen (15 A - F) an die Auswerteelektronik (13); und
einer Speichereinrichtung (16) zum Speichern aktueller Bremsbelagsverschleißzustände sowie vorher erfasster Verschleißzustände.

2. Verschleißanzeigevorrichtung nach Anspruch 1,
**dadurch gekennzeichnet,**
**dass** die Anzeigeeinrichtung (17 A - C) eine mindestens zweistufige Anzeige von Bremsbelags-Verschleißzuständen mit einer Vorwarnstufe und einer Endverschleißstufe aufweist.

3. Verschleißanzeigevorrichtung nach einem der vorangehenden Ansprüche,
**dadurch gekennzeichnet,**
**dass** jeweils eine Anzeigeeinrichtung (17 A - C) pro bremsbarer Fahrzeugachse vorgesehen ist.

4. Verschleißanzeigevorrichtung nach einem der vorangehenden Ansprüche,
**dadurch gekennzeichnet,**
**dass** jeweils eine Anzeigeeinrichtung (17 A - C) pro bremsbarem Fahrzeugrad vorgesehen ist.

5. Verschleißanzeigevorrichtung nach einem der vorangehenden Ansprüche,
**gekennzeichnet,**
**durch** eine Spannungsversorgungsanzeige (18) und/oder eine Batteriespannungsanzeige (18).

6. Verschleißanzeigevorrichtung nach einem der vorangehenden Ansprüche,
**gekennzeichnet,**
**durch** eine zusätzliche Anzeigeeinrichtung (19) zur Anzeige einer Unterbrechung einer jeweiligen Verbindungseinrichtung (14 A - F) zwischen der Auswerteelektronik (13) und einer jeweiligen Verschleißgebereinrichtung (15 A - F).

7. Verschleißanzeigevorrichtung nach einem der vorangehenden Ansprüche,
**dadurch gekennzeichnet,**
**dass** eine zusätzliche Einrichtung (21) zur Anzeige einer aktivierten Feststellbremse vorgesehen ist.

8. Verschleißanzeigevorrichtung nach einem der vorangehenden Ansprüche,
**dadurch gekennzeichnet,**
**dass** eine Anschlusseinrichtung (20) zum Weiterleiten der Daten der Auswerteelektronik (13) an externe Systeme, vorzugsweise ein elektrisches Bremssystem, vorgesehen ist.

9. Verschleißanzeigevorrichtung nach einem der vorangehenden Ansprüche,
**dadurch gekennzeichnet,**
**dass** die Speichereinrichtung (16) über eine externe Elektronik auslesbar ist, welche Daten gegebenenfalls nur nach Eingabe eines vorbestimmten Code-Wortes ausgibt.

10. Verschleißanzeigevorrichtung nach einem der vorangehenden Ansprüche,
**dadurch gekennzeichnet,**
**dass** eine Verschleißgebereinrichtung (15 A - F) pro bremsbarem Fahrzeugrad vorgesehen ist.

11. Verschleißanzeigevorrichtung nach einem der vorangehenden Ansprüche,
**dadurch gekennzeichnet,**
**dass** die Spannungsversorgungseinrichtung (11, 12) und die Steuer-/Auswerteeinrichtung (13) sowie die Anzeigeeinrichtungen (17 A - C, 18, 19, 21) auf einer Platine (10) im Chassis oder im Fahrgastraum angeordnet sind.

12. Verschleißanzeigevorrichtung nach einem der vorangehenden Ansprüche,
**dadurch gekennzeichnet,**
**dass** die Anzeigeeinrichtungen (17, 18, 19, 21) jeweils Leuchtmittel, vorzugsweise LEDs, aufweisen.

13. Verschleißanzeigevorrichtung nach wenigstens einem der vorangehenden Ansprüche,
**dadurch gekennzeichnet,**
**dass** bei der Abspeicherung von Bremsbelagsverschleißzuständen zugleich die jeweilige Kilometerleistung simultan abgespeichert wird.
